(19) Europäisches Patentamt
European Patent Office
Office européen des brevets

(11) **EP 1 540 849 B1**

(12) **EUROPEAN PATENT SPECIFICATION**

(45) Date of publication and mention
of the grant of the patent:
**11.02.2009 Bulletin 2009/07**

(51) Int Cl.:
**H04B 7/216** (2006.01)   **H04B 1/707** (2006.01)

(21) Application number: **03752121.8**

(86) International application number:
**PCT/US2003/028163**

(22) Date of filing: **09.09.2003**

(87) International publication number:
**WO 2004/023704 (18.03.2004 Gazette 2004/12)**

(54) **EXTENDED ALGORITHM DATA ESTIMATOR**

DATENSCHÄTZER MIT ERWEITERTEM ALGORITHMUS

EVALUATEUR DE DONNEES A ALGORITHME ETENDU

(84) Designated Contracting States:
**AT BE BG CH CY CZ DE DK EE ES FI FR GB GR
HU IE IT LI LU MC NL PT RO SE SI SK TR**

(30) Priority: **09.09.2002 US 409973 P**

(43) Date of publication of application:
**15.06.2005 Bulletin 2005/24**

(60) Divisional application:
**08171474.3**

(73) Proprietor: **INTERDIGITAL TECHNOLOGY
CORPORATION
Wilmington, Delaware 19810 (US)**

(72) Inventors:
• **PAN, Jung-Lin
Selden, NY 11784 (US)**
• **HUANG, Yuejin
Holbrook, NY 11741 (US)**
• **ZEIRA, Ariela
Huntington, NY 11743 (US)**

(74) Representative: **Giver, Sören Bo et al
Awapatent AB
P.O. Box 5117
200 71 Malmö (SE)**

(56) References cited:
**WO-A-02/39610        US-B2- 6 690 660
US-B2- 6 741 653**

EP 1 540 849 B1

**Description**

FIELD OF INVENTION

The invention generally relates to data estimation for wireless communication systems. More particularly, the invention relates to an extended algorithm (EA) for data estimation in such systems.

BACKGROUND

In some proposed wireless systems, data is wirelessly transmitted block by block with a separation interval between successive blocks. This property permits the application of joint detection (JD) in receivers to suppress the inter-symbol interference (ISI) and multiple-access interference (MAI). Single user detectors (SUDs) are used to estimate data of signals that go through a single downlink channel. An advantage of the SUD is that it can be implemented efficiently by fast Fourier transform (FFT), based on the rationale that a square Toeplitz matrix can be approximated as a circulant counterpart of the same size.

When Toeplitz matrices are shortened along their longer dimensions to square matrices and replaced with their circulant counterparts, an approximation error is introduced. This error is most prevalent in the head and tail portions of the matrix. In many systems, the data associated with the head and tail portions carries system information required by the receivers, such as power control bits and the transport format combination indicator (TFCI) in the proposed third generation partnership project (3GPP) wideband code division multiple access (WCDMA) time division duplex (TDD) system. It is desirable to enhance data estimation in such systems.

Document WO02/39610 A2 discloses a prior art method for recovering data in which a transmitter site transmits a plurality of data signals over a shared spectrum in a code division multiple access communication system. Each transmitted data signal experiences a similar channel response. A combined signal of the transmitted data signals is received. The combined signal is sampled at a multiple of the chip rate. The common channel response for the received combined signal is estimated. A first element of a spread data vector is determined using the combined signal samples and the estimated channel response. Using a factor from the first element determination, remaining elements of the spread data vector are determined. The data of the data signals is determined using the determined elements of the spread data vector.

SUMMARY

The present invention provides a computationally efficient and accurate implementation of a data estimator for systems, such as Frequency Division Duplex (FDD) or Time Division Duplex (TDD) Code Division Multiple Access (CDMA) systems. Described herein is a method of implementing a data estimator wherein no data of interest for estimation will be affected significantly by the circular approximation error. To achieve this, all of the square circulant matrices are extended. The advantages of the extended approach arise from two aspects: (1) the avoidance of loss of multipath signals in the tail part of each data field and (2) the avoidance of error due to the Toeplitz to circulant matrix transformation. As a result, longer discrete Fourier Transforms (DFTs) or FFTs are performed when implementing the EA. In order to minimize the required computations with DFT, the extended sizes should preferably be limited dynamically to their lower bounds according to specific data block length and channel delay spread. However, if prime factor algorithm (PFA) is used, increasing the FFT length usually does not result in the increase of computational complexity. It is to be noted that the computations can be minimized through choosing a proper FFT length in a certain range. In this case, fixed single-length FFTs are desirable by considering the longest block length and delay spread. The single-length FFT with PFA makes it possible that different lengths of data block (burst types) are supported by one algorithm only. This simplifies the implementation further since one piece of hardware is needed to cope with the single algorithm.

The present invention provides a method for recovering data from a plurality of signals received in a shared spectrum, the plurality of signals experiencing a similar channel response, the method comprising:

> sampling a composite signal including the plurality of received signals, producing a received vector;
> estimating a channel response of the composite signal, characterized by extending the received vector by zero padding the tail of the received vector;
> extending the channel response by zero padding the tail of the channel response;
> channel equalizing the received vector using the extended channel response, producing a spread vector; and
> despreading the spread vector to produce data of the plurality of signals.

The present invention further provides a receiver comprising:

> an antenna for receiving radio frequency signals;
> a sampling device coupled to the antenna for producing a chip rate received vector;
> a channel estimation device coupled to the sampling device for determining a channel impulse response for the received vector, characterized by
> a single user detector coupled to the sampling device and the channel estimation device for estimating a data vector using an extended algorithm which extends the received vector by zero padding the tail of the received vector and extends the channel impulse response by zero padding the tail of the channel impulse response.

BRIEF DESCRIPTION OF THE DRAWING(S)

A more detailed understanding of the invention may be had from the following description of preferred embodiments given by way of example only and to be understood with reference to the accompanying drawings wherein:

Figure 1 is a block diagram of a system used for implementing an EA with over-sampling in accordance with a preferred embodiment of the present invention;

Figures 2A, 2B and 2C, taken together, are a flow chart illustrating the method steps implemented by the EA of Figure 1.

Figure 3 is an illustration of raw block error rate (BER) of TFCI-1 versus signal to noise (SNR) in Case 1 channel (TFCI represents transport format combination indicator);

Figure 4 is an illustration of raw BER of TFCI-2 versus signal to noise ratio (SNR) per code in Case 1 channel;

Figure 5 is an illustration of raw BER of all bits versus SNR per code in Case 1 channel;

Figure 6 is an illustration of raw BER of TFCI-1 versus SNR per code in Case-2 channel;

Figure 7 is an illustration of raw BER of TFCI-2 versus SNR per code in Case-2 channel;

Figure 8 is an illustration of all bits versus SNR per code in Case-2 channel; and

Figures 9A and 9B are receiver implementations using extended algorithm data detection.

DETAILED DESCRIPTION OF THE PREFERRED EMBODIMENT(S)

The invention is generally applicable for data estimation in CDMA systems, such as 3GPP TDD mode and time division synchronous code division multiple access (TD-SCDMA). However, the following description, as an example, refers to a TDD CDMA system model and algorithm. In the described example, if a composite spread signal is sent from one transmitter site to one reception site, the received signal, $\underline{r}$, is composite spread signal, $\underline{s}$, passed through a single channel, $\underline{H}$. $\underline{H}$ is the channel response matrix. This process can be represented as $\underline{r} = \underline{Hs} + \underline{n}$, where $\underline{n}$ is the noise vector. With $W$ being the length of channel response, $\underline{H}$ takes the form per Equation 1.

$$\underline{H} = \begin{bmatrix} h_0 & & & & & \\ h_1 & h_0 & & & & \\ \cdot & h_1 & & & & \\ \cdot & \cdot & \cdot & \cdot & & \\ h_{W-1} & \cdot & \cdot & \cdot & & \\ & h_{W-1} & \cdot & \cdot & \cdot & \\ & & \cdot & & \cdot & h_0 \\ & & & \cdot & & h_1 \\ & & & \cdot & & \cdot \\ & & & \cdot & & \cdot \\ & & & & h_{W-1} \end{bmatrix} ,$$

Equation 1

$\underline{H}$ is of size (L+W-1) by L. L denotes the number of chips in the time period of interest, such as a data field (block). The composite spread signal $\underline{s}$ can be expressed as $\underline{s} = C\underline{d}$, where the symbol vector $\underline{d}$ and the code matrix $C$ take the form per Equation 2.

$$\underline{d} = \left(d_1, d_2, \ldots, d_{KN_s}\right)^T$$

<div align="right">Equation 2</div>

T denotes the transposition and C is per Equation 3.

$$C = \left[\underline{C}^{(1)}, \underline{C}^{(2)}, \ldots, \underline{C}^{(K)}\right]$$

<div align="right">Equation 3</div>

Each $C^{(k)}$ is per Equation 4.

$$\underline{C}^{(k)} = \begin{bmatrix} c_1^{(k)} & & & & & \\ \vdots & & & & & \\ c_Q^{(k)} & & & & & \\ & c_1^{(k)} & & & & \\ & \vdots & & & & \\ & c_Q^{(k)} & & & & \\ & & \ddots & & & \\ & & & & c_1^{(k)} & \\ & & & & \vdots & \\ & & & & c_Q^{(k)} & \end{bmatrix}$$

<div align="right">Equation 4</div>

$Q$, $K$, and $N_s$ (=L/Q) denote the spread factor (SF), the number of active codes, and the number of symbols carried on each channelization code, respectively.

The SUD comprises two stages: (a) channel equalization and (b) despreading. In the first stage, the composite spread signal $\underline{s}$ is estimated from $\underline{r} = \underline{H}\underline{s} + \underline{n}$, preferably through a minimum mean squared error (MMSE) equalizer or a zero forcing solution.

An MMSE equalizer is per Equation 5.

$$\hat{\underline{s}} = \left[R_H + \sigma^2 I\right]^{-1} \underline{H}^H \underline{r}$$
$$= \left[R_H + \sigma^2 I\right]^{-1} R_H \underline{s} + \left[R_H + \sigma^2 I\right]^{-1} \underline{H}^H \underline{n}$$

<div align="right">Equation 5</div>

A zero forcing solution is per Equation 6.

$$\hat{\underline{s}} = R_H{}^{-1}\,\underline{H}^H\,\underline{r}\,, \qquad\qquad \text{Equation 6}$$

I is the identity matrix, $R_H = \underline{H}^H\,\underline{H}$ is a square Toeplitz matrix of size L, per Equation 7.

$$R_H = \begin{bmatrix}
R_0 & R_1 & \cdots & R_{W-1} & 0 & 0 & \cdots & & & & & 0 \\
R_1^* & R_0 & \ddots & & R_{W-1} & 0 & \ddots & & & & & \\
 & R_1^* & \ddots & R_1 & & R_{W-1} & \ddots & 0 & & & & \\
R_{W-1}^* & & \ddots & R_0 & R_1 & & \ddots & 0 & 0 & & & \\
0 & R_{W-1}^* & & R_1^* & R_0 & \ddots & & R_{W-1} & 0 & & & \\
0 & 0 & \ddots & & R_1^* & \ddots & \ddots & & R_{W-1} & \ddots & 0 & \vdots \\
\vdots & 0 & \ddots & R_{W-1}^* & & \ddots & \ddots & R_1 & & \ddots & 0 & 0 \\
 & & \ddots & 0 & R_{W-1}^* & & \ddots & R_0 & R_1 & & R_{W-1} & 0 \\
 & & & 0 & 0 & R_{W-1}^* & & R_1^* & R_0 & \ddots & & R_{W-1} \\
 & & & & 0 & 0 & \ddots & & R_1^* & \ddots & R_1 & \\
 & & & & & 0 & \ddots & R_{W-1}^* & & \ddots & R_0 & R_1 \\
0 & & & & & \cdots & 0 & 0 & R_{W-1}^* & \cdots & R_1^* & R_0
\end{bmatrix}$$

$$\text{Equation 7}$$

'*' denoting the conjugate operation. In the second stage, a simple de-spreading process is performed to estimate the symbol sequence $\underline{d}$, $\hat{\underline{d}}$, per Equation 8.

$$\hat{\underline{d}} = C^H\,\hat{\underline{s}}\,. \qquad\qquad \text{Equation 8}$$

To implement Equation 5 efficiently, it is desirable to approximate the algorithm properly. To do this, first the Toeplitz matrix $\underline{H}$ is extended from the size of L+W-1 by L to the size of Lm+W-1 by Lm and then the square matrix $R_H$ is extended from the size of L to Lm with Lm $\geq$ L+W-1, while keeping the banded and Toeplitz structure of the matrices intact. The vector $\underline{r}$ is extended to the length Lm by zero padding, if the length of $\underline{r}$ is less than Lm. The vectors $\underline{s}$ and $\underline{n}$ are effectively automatically extended, due to the padding extension of the other vector/matrix. The extended versions of the matrices and vector $\underline{H}$, $R_H$, $\underline{s}$, $\underline{r}$ and $\underline{n}$ are denoted as $\underline{H}_E$, $R_E$, $\underline{s}_E$, $\underline{r}_E$ and $\underline{n}_E$, respectively. $R_E$ is as follows,

$$R_E = \underline{H}_E^H\,\underline{H}_E\,.$$

The last Lm-L elements of $\underline{s}_E$ can all be deemed to be zero, which is essential in understanding the avoidance of the implementation error. With these notations, Equation 5 can be rewritten as Equation 9.

$$\hat{\underline{s}}_E = \left[R_E + \sigma^2 I\right]^{-1}\underline{H}_E^H\,\underline{r}_E\,, \qquad\qquad \text{Equation 9}$$

$\underline{r}_E$ is as follows $\underline{r}_E = \underline{H}_E\underline{s}_E + \underline{n}_E$. Because Equation 9 is the extended version of Equation 5, there should not be any differences between them if only the first L elements of $\hat{\underline{s}}_E$ are considered. The last W-1 rows of the $\underline{H}_E$ are cut to get a new square matrix of size Lm, denoted by $\underline{H}_S$. Suppose $R_{Cir}$ and $\underline{H}_{Cir}$ represent the circular counterparts of $R_E$ and $\underline{H}_S$,

respectively. From $R_E$ and $\underline{H}_S$, $R_{Cir}$ and $\underline{H}_{Cir}$ are constructed as per Equations 10 and 11.

$$R_{Cir} = \begin{bmatrix} R_0 & R_1 & \cdots & R_{W-1} & 0 & 0 & \cdots & & & R_{W-1}^* & \cdot & R_1^* \\ R_1^* & R_0 & \ddots & & R_{W-1} & 0 & \ddots & & & & \cdot & \cdot \\ & R_1^* & \ddots & R_1 & & R_{W-1} & \ddots & 0 & & & & R_{W-1}^* \\ R_{W-1}^* & & \ddots & R_0 & R_1 & & \ddots & 0 & 0 & & & \\ 0 & R_{W-1}^* & & R_1^* & R_0 & \ddots & & R_{W-1} & 0 & & & \\ 0 & 0 & \ddots & & R_1^* & \ddots & \ddots & & R_{W-1} & \ddots & 0 & \vdots \\ \vdots & 0 & \ddots & R_{W-1}^* & & \ddots & \ddots & R_1 & & \ddots & 0 & 0 \\ & & \ddots & 0 & R_{W-1}^* & & \ddots & R_0 & R_1 & & R_{W-1} & 0 \\ & & & 0 & 0 & R_{W-1}^* & & R_1^* & R_0 & \ddots & & R_{W-1} \\ R_{W-1} & & & & 0 & 0 & \ddots & & R_1^* & \ddots & R_1 & \\ \cdot & & \cdot & & & 0 & \ddots & R_{W-1}^* & & \ddots & R_0 & R_1 \\ R_1 & & \cdot & R_{W-1} & & & \cdots & 0 & 0 & R_{W-1}^* & \cdots & R_1^* & R_0 \end{bmatrix}$$

$$\text{Equation 10}$$

$$\underline{H}_{Cir} = \begin{bmatrix} h_0 & & & & & & h_{W-1} & \cdot & h_1 \\ h_1 & h_0 & \cdot & & & & & \cdot & \cdot \\ \cdot & h_1 & \cdot & & & & & h_{W-1} & \\ h_{w-1} & \cdot & \cdot & \cdot & & & & & \\ & h_{W-1} & \cdot & \cdot & \cdot & & & & \\ & & \cdot & \cdot & \cdot & \cdot & & & \\ & & & \cdot & \cdot & h_0 & & & \\ & & & & \cdot & h_1 & \cdot & & \\ & & & \cdot & \cdot & \cdot & h_0 & & \\ & & & h_{W-1} & \cdot & h_1 & h_0 & \end{bmatrix}$$

$$\text{Equation 11}$$

$R_{CIR}$ and $\underline{H}_{CIR}$ both of them are square matrices of size Lm. Because the last Lm-L elements of $\underline{s}_E$ are zero, $r_E = \underline{H}_S \underline{s}_E + \underline{n}_E$. Replacing $R_E$, $\underline{H}_E^H$ and $r_E$ by $R_{Cir}$, $\underline{H}_{Cir}^H$ and $\underline{H}_S \underline{s}_E + \underline{n}_E$, respectively, in Equation 9, results in Equation 12.

$$\begin{aligned} \underline{\tilde{s}}_E &= \left[ R_{Cir} + \sigma^2 I \right]^{-1} \underline{H}_{Cir}^H \underline{r}_E \\ &= \left[ R_{Cir} + \sigma^2 I \right]^{-1} \underline{H}_{Cir}^H \underline{H}_S \underline{s}_E + \left[ R_{Cir} + \sigma^2 I \right]^{-1} \underline{H}_{Cir}^H \underline{n}_E \end{aligned}$$

$$\text{Equation 12}$$

Assuming $\underline{H}_S = \underline{H}_{Cir} - \underline{H}_\Delta$ ($\underline{H}_\Delta$ is an error matrix), Equation 12 can be expressed as Equation 13.

$$\tilde{\underline{s}}_E = \left[R_{Cir} + \sigma^2 I\right]^{-1} R_{Cir}\,\underline{s}_E + \left[R_{Cir} + \sigma^2 I\right]^{-1} \underline{H}_{Cir}^{H}\,\underline{n}_E$$
$$- \left[R_{Cir} + \sigma^2 I\right]^{-1} y$$

Equation 13

$\underline{y} = \underline{H}_{Cir}^{H}\,\underline{H}_{\Delta}\,\underline{s}_E$ is a column vector of length Lm and the error matrix $\underline{H}_\Delta$ is per Equation 14.

$$\underline{H}_\Delta = \begin{bmatrix} & & h_{W-1} & \cdots & h_1 \\ & & & \ddots & \vdots \\ & & & & h_{W-1} \\ & & & & \\ & & & & \\ & & & & \end{bmatrix}$$

Equation 14

The non-zero elements are located in a triangular area between the first W-1 rows and the last W-1 columns. Without the third term, Equation 13 is very similar to Equation 5 in function when the first L elements are considered. The vector $\underline{y}$ is evaluated. According to the structures of the matrices $\underline{H}_{Cir}^{H}$ and $\underline{H}_\Delta$, the matrix $\underline{X} = \underline{H}_{Cir}^{H}\,\underline{H}_\Delta$ is a square matrix of size Lm with the structure per Equation 15.

$$\underline{X} = \begin{bmatrix} x & \cdots & x & x \\ & x & \cdot & x \\ & & \cdot & \cdot \\ & & & x \\ & & & \\ & & & \\ x & \cdot\cdot & x & x \\ \cdot & \cdot & \cdot & \cdot \\ x & \cdot\cdot & \cdot & x \\ x & \cdot\cdot & x & x \end{bmatrix}$$

Equation 15

The non-zero elements, denoted by 'x', are located only in two areas: (1) a triangular one between the first W-1 rows and the last W-1 columns and (2) a square one between the last W-1 rows and columns. Because the last (Lm-L) elements of $\underline{s}_E$ are zero, all elements of $\underline{y} = \underline{H}_{Cir}^{H}\,\underline{H}_\Delta\,\underline{s}_E = \underline{X}\,\underline{s}_E$ are zero if Lm≥L+W-1. When Lm≥L+W-1, Equation 16 results.

$$\tilde{\underline{s}}_E = \left[R_{Cir} + \sigma^2 I\right]^{-1} \underline{H}_{Cir}^H \underline{r}_E$$
$$= \left[R_{Cir} + \sigma^2 I\right]^{-1} R_{Cir} \underline{s}_E + \left[R_{Cir} + \sigma^2 I\right]^{-1} \underline{H}_{Cir}^H \underline{n}_E ,$$

Equation 16

Equation 16 is a good approximation of Equation 5, when taking only the first L estimates into account. The first portion of Equation 16 is referred to as the EA. Similarly, the head and tail parts of a data field are affected significantly by replacing Toeplitz matrices with their circulant counterparts in Equation 5 directly without matrix extension. The implementation algorithm without matrix extension is called the truncated algorithm (TA). With TA, Equations 9 to 15 are still valid, except that Lm=L. The reason consists of two aspects: First, when replacing $\underline{H}$ in Equation 5 with $\underline{H}_{Cir}$ of size L, the length of the received signal vector $\underline{r}$ is preferably limited to be L. This results in the loss of multipath signals of the data in the tail part of a data field. Therefore, the estimates of the affected data become very poor. Second, when Lm=L, $\underline{y}$ is a column vector of length L, in which the first and last W-1 elements are non-zero elements. Because $B_{Cir} = R_{Cir} + \sigma^2 I$ is of banded structure along the diagonal, the inverse of $B_{Cir}$ has approximately the same structure. Therefore, the relatively large values of the column vector $\underline{z} = B_{Cir}^{-1} \underline{y}$ are located in the first and last W-1 columns and affect the estimates of $\hat{\underline{s}}$ both in the head and tail areas. For the second reason, the number of the affected estimates depends on the channel response length W. The larger the delay spread of a channel (W) is, the more the estimates are affected.

Additionally, the implementation algorithm given by Equation 16 can be extended to support over-sampling. With over-sampling, the effect of timing error is mitigated. Assuming sampling rate is M times of chip rate, M received signal vectors, denoted by $\underline{r}_E^{(m)}$ for m=1,2,...,M, are available. However, the time interval between two successive samples in each $\underline{r}_E^{(m)}$ is the chip duration. Similarly, there are also M sets of channel response, denoted by $\underline{h}^{(m)} = (h_{0,m},h_{1,m},...,h_{W-1,m})$ for m=1,2,...,M. With these channel responses, a total of 2M circulant matrices $\underline{H}_{Cir,m}$ and $R_{Cir,m}$ for m=1,2,...,M can be constructed. Accordingly, the implementation algorithm with over-sampling can be written as per Equation 17.

$$\tilde{\underline{s}}_E = \left[\sum_{m=1}^{M}\left(R_{Cir,m} + \frac{1}{M}\sigma_m^2 I\right)\right]^{-1} \sum_{m=1}^{M} \underline{H}_{Cir,m}^H \underline{r}_E^{(m)}$$

Equation 17

$\sigma_m^2$ is the noise variance corresponding to the mth input vector $\underline{r}_E^{(m)}$.

Before implementation, the value of Lm is determined. Because Lm is larger than L+W-1, Lm is chosen as per Equation 18.

$$Lm = \max\{L\} + \max\{W\} + \varepsilon,$$

Equation 18

max {.} is the maximum value of {.} and $\varepsilon$ is a positive integer used to let Lm a good length for FFT implementation. For example, in UTRA wideband TDD system (WTDD), max {L}=1104, max {W}=114. $\varepsilon$ is chosen to be equal to 14 to let Lm=1232. With this length, FFT can be performed very efficiently by PFA because 1232 can be factored as 1232=7×11×16. With complex input, the real multiplies and adds required by the 1232-point FFT are 8836 and 44228, respectively. From Equation 18, Lm depends on specific system design. However, the implementation approach described herein is applicable to any other TDD systems such as UTRA narrowband TDD system (TD-SCDMA).

In the following, the preferred implementation procedure of Equation 17 is described as method steps under the assumption that the FFT length P equals the selected Lm.

The first column $\underline{g}$ of the circulant matrix $\sum_{m=1}^{M}\left(R_{Cir,m} + \frac{1}{M}\sigma_m^2 I\right)$ is computed based on the estimated channel response and noise power, yielding Equation 19.

$$\underline{g} \approx \sum_{m=1}^{M}\left( R_{0,m} + \frac{1}{M}\sigma_m^2, R_{1,m}^*, \cdots, R_{W-1,m}^*, 0, \cdots, 0, R_{W-1,m}, \cdots, R_{1,m} \right)^T.$$

<div align="right">

**Equation 19**

</div>

The circulant matrix $\sum_{m=1}^{M}\left( R_{Cir,m} + \frac{1}{M}\sigma_m^2 I \right)$ in the FFT domain is decomposed , yielding Equation 20.

$$\sum_{m=1}^{M}\left( R_{Cir,m} + \frac{1}{M}\sigma_m^2 I \right) = D_P^{-1}\Lambda_R D_P,$$

<div align="right">

**Equation 20**

</div>

$D_P$ and $D_P^{-1}$ are the P-point FFT and inverse FFT (IFFT) matrices defined as per Equation 21.

$$D_P \underline{x} = \sum_{n=0}^{P-1} x(n)e^{-j\frac{2\pi k n}{P}} \quad \text{and} \quad D_P^{-1}\underline{x} = \frac{1}{P}\sum_{n=0}^{P-1} x(n)e^{j\frac{2\pi k n}{P}}, \quad \text{for} \quad k=0,1,\ldots,P\text{-}1,$$

<div align="right">

**Equation 21**

</div>

$\Lambda_R$ is a diagonal matrix of size P, whose diagonal is $D_P\underline{g}$. $\Lambda_R$ is denoted as $\Lambda_R = diag(D_P\underline{g})$. The relation between $D_P^{-1}$ and $D_P$ is $D_P^{-1} = (1/P)D_P^*.$

The circulant matrix $\underline{H}_{Cir,m}$ is decomposed in the FFT domain, yielding Equation 22.

$$\underline{H}_{Cir,m} = D_P^{-1}\Lambda_{H_m} D_P, \qquad \qquad \text{Equation 22}$$

$\Lambda_{Hm}$ is a diagonal matrix of size P, whose diagonal is $D_P\underline{u}_m$ with $\underline{u}_m = [h_{0,m}, h_{1,m}, \ldots, h_{W-1,m}, 0, \ldots, 0]^T$ being the first column of $\underline{H}_{Cir,m}.$

The received signal vector $\underline{r}^{(m)}$ is reconstructed by zero padding to get the extended signal vector $\underline{r}_E^{(m)}$ of length P.

The composite spread signal vector $\underline{\tilde{s}}_E$ is computed yielding Equation 23 or Equation 24 in the frequency domain.

$$\underline{\tilde{s}}_E = \left[ \sum_{m=1}^{M}\left( R_{Cir,m} + \sigma_m^2 I \right) \right]^{-1} \sum_{m=1}^{M}\underline{H}_{Cir,m}^H \underline{r}_E^{(m)} = D_P^{-1}\Lambda_R^{-1}\sum_{m=1}^{M}\Lambda_{H_m}^* D_P \underline{r}_E^{(m)}$$

<div align="right">

**Equation 23**

</div>

$$D_P \tilde{\underline{s}}_E = \left( \sum_{m=1}^{M} (D_P \underline{u}_m)^* \otimes \left(D_P \underline{r}_E^{(m)}\right) \right) \Big/ (D_P \underline{g}) \qquad \text{and} \qquad \tilde{\underline{s}}_E = D_P^{-1}\{D_P \tilde{\underline{s}}_E\},$$

$$\text{Equation 24}$$

The operators $\otimes$ and $/$ denote the vector multiplication and division performed on element-by-element basis, respectively. The last P-L elements of $\tilde{\underline{s}}_E$ are rounded off to get another vector $\hat{\underline{s}}$ of length L.

The composite spread signal $\hat{\underline{s}}$ is despread, yielding $\tilde{\underline{s}}_E$.

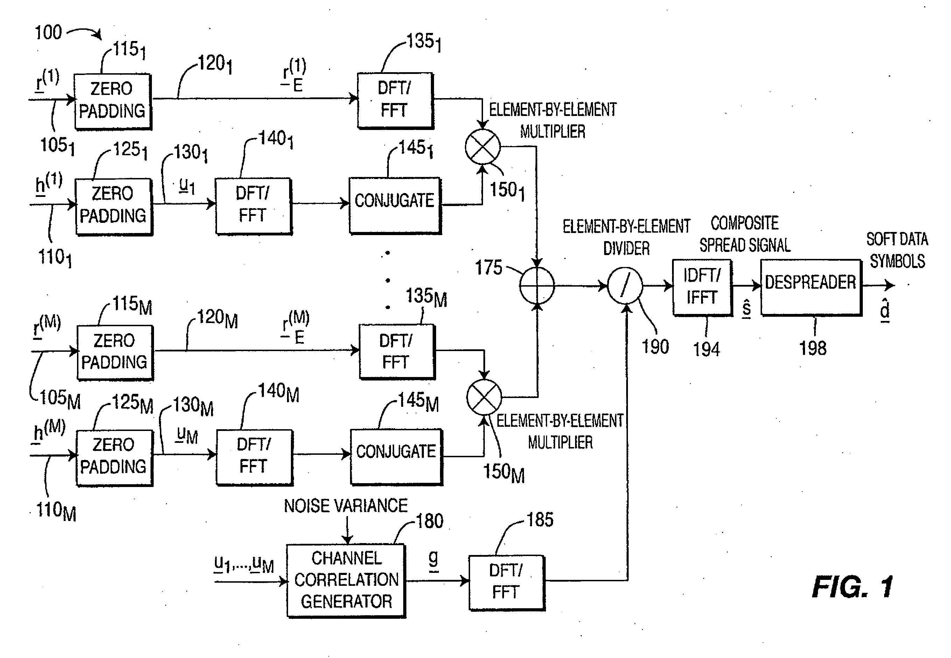

Figure 1 is a block diagram of a system 100. For an over-sampled system, M sampled sequences are processed, $\underline{r}^{(1)}$ ... $\underline{r}^{(M)}$ and $\underline{h}^{(1)}$... $\underline{h}^{(M)}$. For a chip rate sampled sequence, only one sampled sequence is processed, $\underline{r}^{(1)}$ and $\underline{h}^{(1)}$. The system 100 receives the signals $\underline{r}^{(1)}$... $\underline{r}^{(M)}$ at inputs $105_1$...$105_M$ (105) and receives the channel impulse response $\underline{h}^{(1)}$... $\underline{h}^{(M)}$ at inputs $110_1$...$110_M$ (110). The received signals $\underline{r}^{(1)}$ ... $\underline{r}^{(M)}$ are zero padded in the tail by zero padding devices $115_1$...$115_M$ (115) until the length of each sequence achieves length Lm. The extended sequences after zero padding are denoted as $\underline{r}_E^{(1)} ... \underline{r}_E^{(M)}$ which exits block 115 via outputs $120_1$...$120_M$ (120). The channel impulse responses $\underline{h}^{(1)}$...$\underline{h}^{(M)}$ are zero padded in the tail by zero padding devices $125_1$...$125_M$ (125) until the length of the extended sequence achieves length Lm. The extended sequences after zero padding are denoted as $\underline{u}_1$...$\underline{u}_M$ which exits the zero padding devices 125 via outputs $130_1$...$130_M$ (130). DFT or FFT blocks $135_1$...$135_M$ (135) receive the outputs 120 from zero padding devices 115 and perform DFT or FFT on $\underline{r}_E^{(1)} ... \underline{r}_E^{(M)}$, $F(\underline{r}_E^{(1)}) ... F(\underline{r}_E^{(M)})$. DFT or FFT blocks $140_1$...$140_M$ (140) receive the outputs 130 from zero padding devices 125 and perform DFT or FFT on $\underline{u}_1$ ... $\underline{u}_M$, $F(\underline{u}_1)$...$F(\underline{u}_M)$. Conjugate devices $145_1$...$145_M$ (145) conjugate $F(\underline{u}_1)$...$F(\underline{u}_M)$, $F(\underline{u}_1)^{*1}$ ... $F(\underline{u}_M)^*$. Element-to-element multipliers $150_1$... $150_M$ (150) multiply the sequences $F(\underline{r}_E^{(1)}) ... F(\underline{r}_E^{(M)})$ and $F(\underline{u}_1)^*$... $F(\underline{u}_M)^*$, $F(\underline{r}_E^{(1)}) \cdot F(\underline{u}_1)^* ... F(\underline{r}_E^{(M)}) \cdot F(\underline{u}_{M1})^*$.

All of the M sampled sequence results are added element-to-element by adder 175 with $\sum_{m=1}^{M} F(\underline{r}_E^{(m)}) \cdot F(\underline{u}_m)^*$ , M = 1,2,...,M. A channel correlation vector $\underline{g}$ is generated by a channel correlation generator 180 using extended channel response sequences $\underline{u}_1$,..., $\underline{u}_M$, with $\underline{g} = \sum_{m=1}^{M} \underline{g}^{(m)}$.

Using an MMSE algorithm, a noise variance $\sigma_m^2$ is added to the first element of vector $\underline{g}^{(m)}$. Vector $\underline{g}^{(m)}$ is generated using $\underline{u}_m$. The i-th element of the vectors $\underline{g}^{(m)}$ for the m-th sampled sequence is computed by: circulating the conjugate vector $\underline{u}_m^*$ by downshifting i-1 elements and multiplying the shifted vector $\underline{u}_m^*$ by the vector $\underline{u}_m$ such that $\underline{g}$ $\underline{g}^{(m)}(i) = \underline{u}_{m,(i-1)shifts}^H \underline{u}_m$ , $m =1,2,...,M$. A DFT or FFT device 185 performs a DFT or FFT on channel correlation vector $\underline{g}$, $F(\underline{g})$. Divider 190 divides element-by-element the output of adder 175 by the output of DFT or FFT device 185, such that $\dfrac{\sum_{m=1}^{M} F(\underline{r}_E^{(m)}) \cdot F(\underline{u}_m)^*}{F(\underline{g})}$. Inverse DFT or inverse FFT device 194 is performed on the output of divider 190, such that $F^{-1}\left(\dfrac{\sum_{m=1}^{M} F(\underline{r}_E^{(m)}) \cdot F(\underline{u}_m)^*}{F(\underline{g})}\right)$. The output of the inverse DFT or inverse FFT device 194 is an estimate of the composite spread signal $\hat{\underline{s}}$. Despreader 198 despreads the output of inverse DFT or inverse FFT device 194 to obtain the estimated data symbols $\hat{\underline{d}}$.

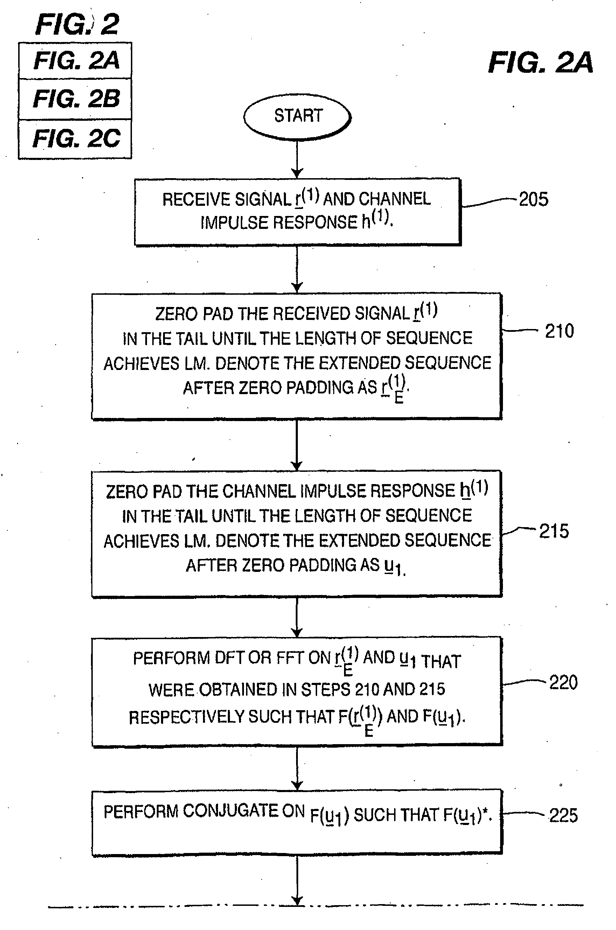

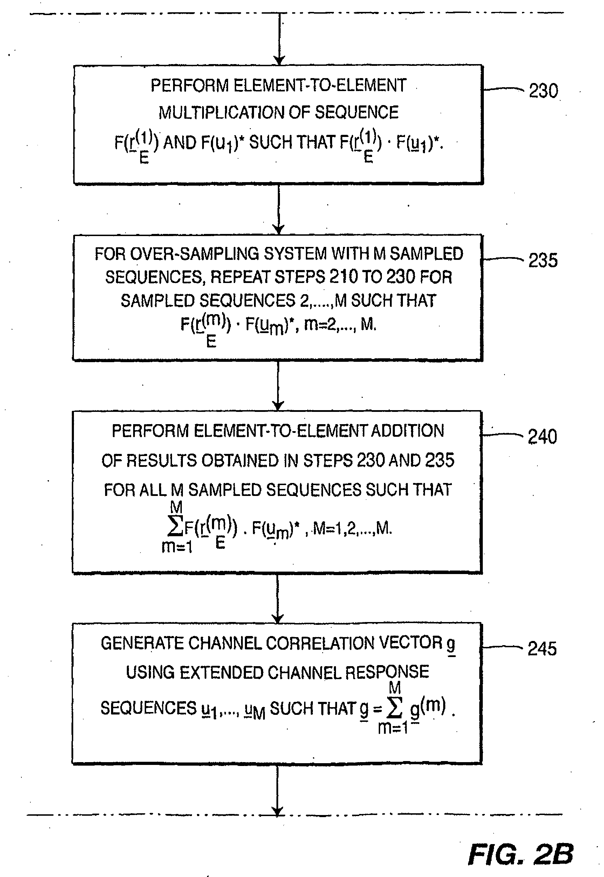

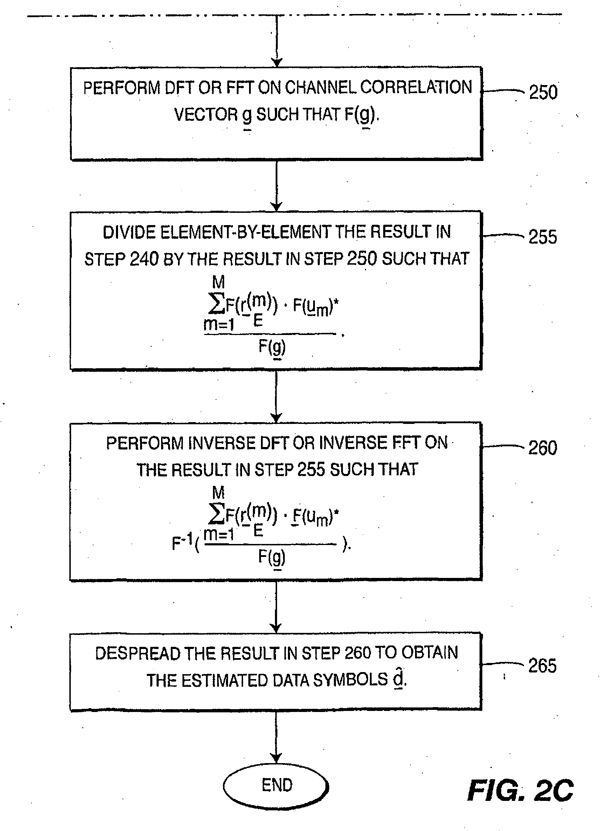

Referring to Figures 2A, 2B and 2C, the procedure for performing an EA in accordance with a preferred embodiment of the present invention is described as follows:

In step 205, system 100 receives signal $\underline{r}^{(1)}$ at input 105 and receives the channel impulse response $\underline{h}^{(1)}$ at input 110.

In step 210, the received signal $\underline{r}^{(1)}$ is zero padded in the tail by zero padding device 115 until the length of sequence achieves length Lm. The extended sequence after zero padding is denoted as $\underline{r}_E^{(1)}$ which exits block 115 via output 120.

In step 215, the channel impulse response $\underline{h}^{(1)}$ is zero padded in the tail by zero padding device 125 until the length of the extended sequence achieves length Lm. The extended sequence after zero padding is denoted as $\underline{u}_1$ which exits the zero padding device 125 via output 130.

In step 220, DFT or FFT block 135 receives the output 120 from zero padding device 115 and performs DFT or FFT on $\underline{r}_E^{(1)}$ such that $F(\underline{r}_E^{(1)})$. DFT or FFT block 140 receives the output 130 from zero padding device 125 and performs DFT or FFT on $\underline{u}_1$, $F(\underline{u}_1)$.

In step 225, conjugate device 145 conjugates $F(\underline{u}_1)$, $F(\underline{u}_1)^*$.

In step 230, element-to-element multiplier 150 multiplies the sequences $F(\underline{r}_E^{(1)})$ and $F(\underline{u}_1)^*$ producing

$$F(\underline{r}_E^{(1)}) \cdot F(\underline{u}_1)^*.$$

In step 235, for over-sampling system with M sampled sequences, steps 210 to 230 are repeated for sampled sequences 2,...,M, $F(\underline{r}_E^{(m)}) \cdot F(\underline{u}_m)^*$, for m = 2,..., M.

In step 240, all of the M sampled sequence results obtained in steps 230 and 235 are added element-to-element by adder 175, $\sum_{m=1}^{M} F(\underline{r}_E^{(m)}) \cdot F(\underline{u}_m)^*$ , for m = 1,2,...,M.

In step 245, a channel correlation vector $\underline{g}$ is generated by a channel correlation generator 180 using extended channel response sequences $\underline{u}_1,...,\underline{u}_M$, such that $\underline{g} = \sum_{m=1}^{M} \underline{g}^{(m)}$.

In step 250, a DFT or FFT 185 performs DFT or FFT on channel correlation vector $\underline{g}$, $F(\underline{g})$.

In step 255, divider 190 divides element-by-element the result in step 240 by the result in step 250,

$$\frac{\sum_{m=1}^{M} F(\underline{r}_E^{(m)}) \cdot F(\underline{u}_m)^*}{F(\underline{g})}.$$

In step 260, an inverse DFT or inverse FFT 194 is performed on the result of step 255,

$$F^{-1}\left( \frac{\sum_{m=1}^{M} F(\underline{r}_E^{(m)}) \cdot F(\underline{u}_m)^*}{F(\underline{g})} \right),$$ producing the estimated composite spread signal, $\hat{\underline{S}}$.

In step 265, despreader 198 despreads the output of step 260 to obtain the estimated data symbols $\hat{\underline{d}}$.

In simulation, the described model is based on K = 12, and that codes are transmitted with equal code power and the effects of midamble signal on the second data field have been cancelled completely. Each code has an SF =16. A total 1104 chips in a data field are assumed (burst type 2 in WTDD). Because there are two data fields in a timeslot in WTDD, the last 8 bits (4 complex symbols) of the first data field, and the first 8 bits of the second data field are defined as TFCI-1 and TFCI-2, respectively. Two algorithms, truncated algorithm (TA) and extended algorithm (EA), are employed. The raw bit error rates of TFCI-1, TFCI-2 as well as all bits are evaluated for both EA and TA with chip rate sampling. 1000 timeslots are accumulated for each SNR point. The simulations are run over the WG4 Case-1 and 2 channels.

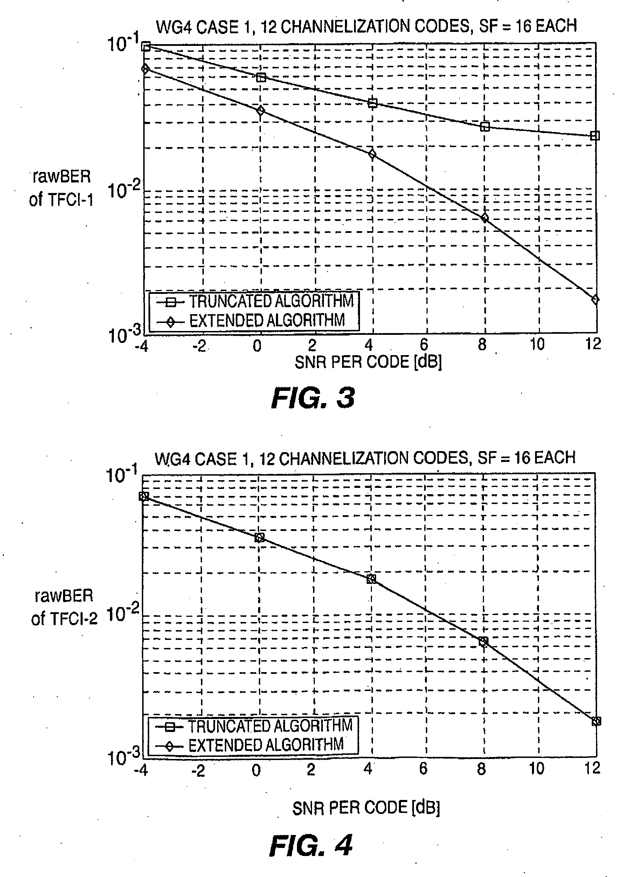

Figures 3 and 4 present the performance of TFCI-1 and TFCI-2 in WG4 Case-1 channel when EA and TA are used. A significant performance gap between EA and TA is found as shown in Figure 3. Because TFCI-1 locates in the tail part of the first data field, the performance degradation of the TFCI-1 with TA results from two reasons: (1) loss of TFCI-1 multipath signals and (2) Toeplitz to circulant matrix replacement in the implementation because the channel response length W is small (W=4) for WG4 Case-1 channel. This conclusion is confirmed by the results shown in Figure 4. Because the performance in Figure 4 is for the TFCI-2 which locates in the head part of the second data field, the most probable reason that affects its performance with TA must be the second one: matrix replacement. From Figure 4, it can be seen that the performance of TFCT-2 with EA and TA is nearly identical. This implies that the estimate error introduced to the TA through the matrix replacement is very limited because of the small value of W for WG4 Case-1 channel. For example, when W=4, only a quarter of the first symbol is affected because of the relationship SF=16.

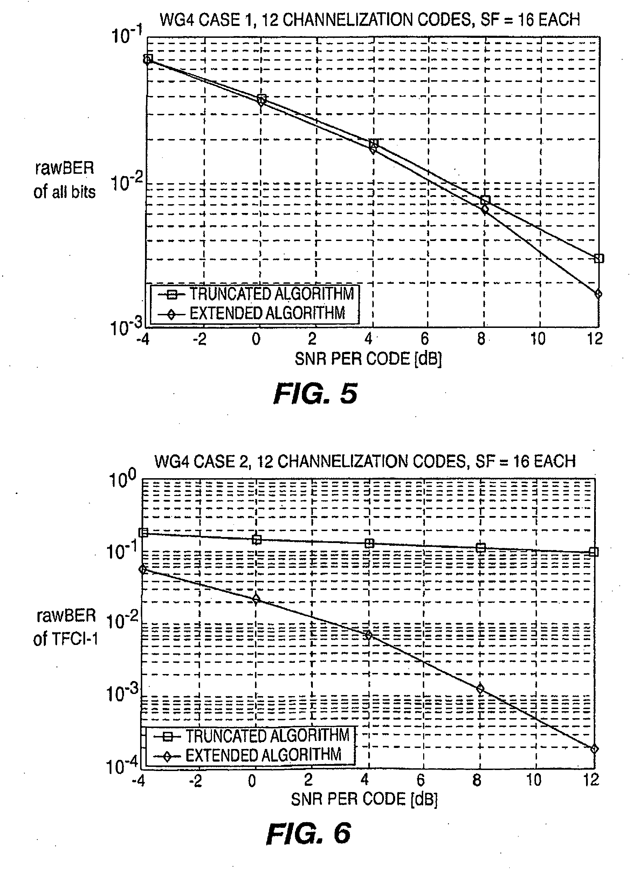

Figure 5 shows the raw BER of all bits when EA and TA are assumed. Comparing with EA, the major contributor to the loss of raw BER of all bits with TA is the TFCI-1 in each timeslot.

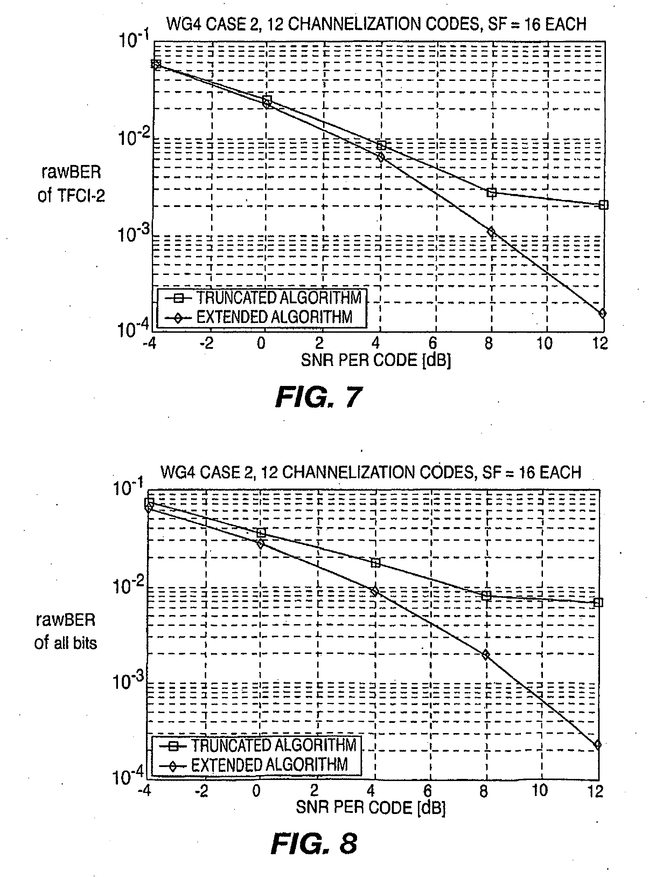

Figures 6 and 7 show the performance of TFCI-1 and TFCI-2 in WG4 Case-2 channel when EA and TA are adopted. Case-2 channel differs from Case-1 channel by much larger delay spread (W=46) as well as stronger power of multipath signals. From Figure 6, the TFCI-1 with TA is seen to be almost destroyed both due to the loss of its multipath signals and matrix replacement. In Figure 7, the performance of TFCI-2 with TA is still much poorer than that with EA, which is due to the matrix replacement only. In this case, W=46 and hence the first three symbols (six bits) will be affected significantly. Figure 8 presents the raw BER of all bits for EA and TA in Case-2 channel.

When a truncated algorithm (TA) is used in the implementation, the data in the head and tail parts of a data field are affected significantly by two aspects: the lost information of multipath signals due to cutting the channel response matrix to be square and the error due to replacing Toeplitz matrices with circulant ones. To overcome this problem, an EA is used. The EA avoids implementation errors by choosing the size of the extended matrices properly. To implement the EA with DFT, a dynamic-length EA is desirable, while for an EA with FFT of PFA, a fixed-length approach is more appropriate. In the fixed-length approach, the computation complexity can be minimized through choosing a proper PFA length in a certain range. The fixed-length EA makes different data block lengths (burst types) be supported by one algorithm only. The fixed length EA simplifies the implementation further since one piece of hardware is needed to cope with the single algorithm. Simulation results show that the performance of the EA is much better than that of the TA, especially for the data in the head and tail parts of data fields.

The invention can be implemented at a base station or wireless transmit/receive unit (WTRU). Hereafter, a wireless transmit/receive unit (WTRU) includes but is not limited to a user equipment, mobile station, fixed or mobile subscriber unit, pager, or any other type of device capable of operating in a wireless environment. When referred to hereafter, a base station includes but is not limited to a base station, Node-B, site controller, access point or other interfacing device in a wireless environment.

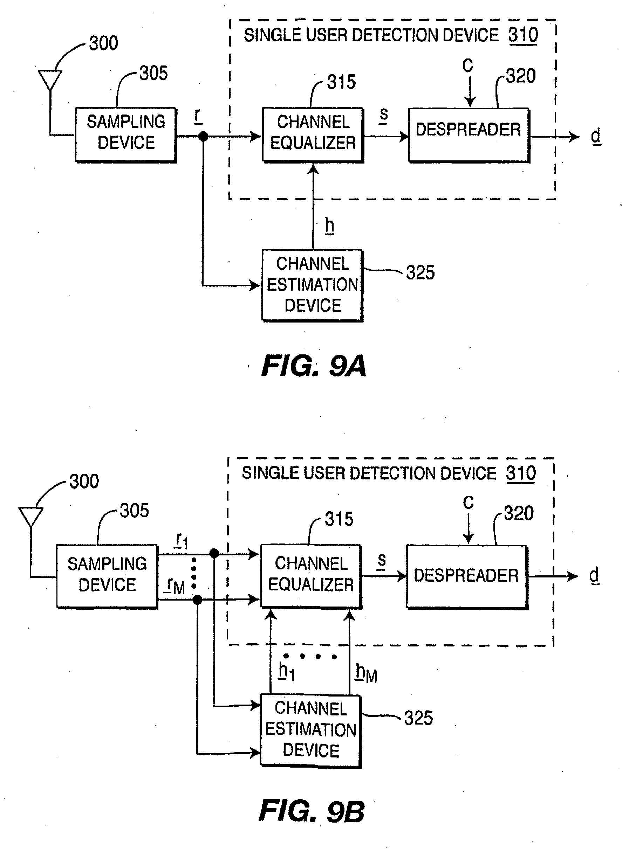

Figures 9A and 9B are receiver implementations using extended algorithm data detection. Referring to Figure 9A, radio frequency (RF) signals are received by an antenna 300. A sampling device 305 produces a chip rate received vector $\underline{r}$. A channel estimation device 325 determines a channel impulse response $\underline{h}$ for the received vector. A single user detection device 310 uses the received vector $\underline{r}$ and the channel impulse response $\underline{h}$ to estimate the data vector $\underline{d}$ using the extended algorithm. The received vector $\underline{r}$ is processed by a channel equalizer 315 using the channel impulse response $\underline{h}$ to determine a spread vector $\underline{s}$. A despreader 320 using the transmission codes C despreads the spread vector $\underline{s}$ to estimate the data vector $\underline{d}$.

Referring to Figure 9B, RF signals are received by an antenna 300. A sampling device 305 samples the received signal at a multiple M of the chip rate, producing M received vector sequences $\underline{r}_1..\underline{r}_m$. A channel estimation device 325 determines a channel impulse response $\underline{h}_1...\underline{h}_m$ corresponding to each received vector $\underline{r}_1...\underline{r}_m$. A single user detection device 310 uses the received vector sequences $\underline{r}_1...\underline{r}_m$ and the channel impulse responses $\underline{h}_1...\underline{h}_m$ to estimate the data vector $\underline{d}$ using the extended algorithm. The received vectors $\underline{r}_1...\underline{r}_m$ are processed by a channel equalizer 315 using the channel impulse responses $\underline{h}_1...\underline{h}_m$ to determine a spread vector $\underline{S}$. A despreader 320 using the transmission codes C despreads the spread vector $\underline{S}$ to estimate the data vector $\underline{d}$.

While the present invention has been described in terms of the preferred embodiment, other variations which are within the scope of the invention as outlined in the claims below will be apparent to those skilled in the art.

## Claims

1. A method for recovering data from a plurality of signals received (205) in a shared spectrum, the plurality of signals experiencing a similar channel response, the method comprising:

    sampling a composite signal including the plurality of received signals, producing a received vector;
    estimating a channel response of the composite signal, **characterized by**
    extending the received vector by zero padding the tail of the received vector (210);
    extending the channel response by zero padding the tail of the channel response (215);
    channel equalizing the received vector using the extended channel response, producing a spread vector; and
    despreading (265) the spread vector to produce data of the plurality of signals.

2. The method of claim 1 wherein a time interval between two successive samples in each extended received vector is the chip duration.

3. The method of claim 1 wherein a time interval between two successive samples in each extended received vector is a fraction of the chip duration.

4. The method of claim 1 further comprising:

   computing a first column of a circulant matrix based on estimated channel response and noise power;
   decomposing a received vector circulant matrix in a fast Fourier transform (FFT) domain;
   decomposing a channel response circulant matrix in the fast Fourier transform (FFT) domain;
   reconstructing the received signal vector resulting in an extended signal vector;
   computing the composite spread signal vector; and
   despreading the composite spread signal.

5. The method of claim 1, wherein

   (a) the reception of a plurality of signals comprises receiving (205) a signal $\underline{r}^{(1)}$ at a first input, and estimating the channel response comprises receiving a channel impulse response $\underline{h}^{(1)}$ at a second input;
   (b) the extension of the received signal comprises zero padding (210) the received signal $\underline{r}^{(1)}$ in the tail until the length of sequence achieves length Lm and denoting the extended sequence after zero padding as $\underline{r}_E^{(1)}$;
   (c) the extension of the channel response comprises zero padding (215) the channel impulse response $\underline{h}^{(1)}$ in the tail until the length of the extended sequence achieves length Lm and denoting the extended sequence after zero padding as $\underline{u}_1$;
   (d) the channel equalization comprises

   performing a discrete Fourier Transform (DFT) or fast Fourier transform (FFT) (220) on $\underline{r}_E^{(1)}$ such that

   $$F(\underline{r}_E^{(1)});$$

   performing DFT or FFT (220) on $\underline{u}_1$ such that $F(\underline{u}_1)$;
   conjugating (225) $F(\underline{u}_1)$ such that $F(\underline{u}_1)^*$;

   multiplying (230) the sequences $F(\underline{r}_E^{(1)})$ and $F(\underline{u}_1)^*$ such that $F(\underline{r}_E^{(1)}) \cdot F(\underline{u}_1)^*$, wherein for M sampled sequences, steps (b) - (g) are repeated for sampled sequences 2,...,M such that $F(\underline{r}_E^{(m)}) \cdot F(\underline{u}_m)^*$, m = 2,..., M.

6. The method of claim 5, wherein all of the M sampled sequence results obtained in steps (b) - (g) are added (240) element-to-element such that $\displaystyle\sum_{m=1}^{M} F(\underline{r}_E^{(m)}) \cdot F(\underline{u}_m)^*$ , M = 1,2,...,M.

7. The method of claim 6 further comprising:

   (h) generating a channel correlation vector $\underline{g}$ (245) using extended channel response sequences $\underline{u}_1,...,\underline{u}_M$ such that $\displaystyle \underline{g} = \sum_{m=1}^{M} \underline{g}^{(m)}$;

   (i) performing DFT or FFT (250) on channel correlation vector $\underline{g}$ such that $F(\underline{g})$;

   (j) dividing (255) element-by-element the result in step (g) by the result in step (i) such that

   $$\dfrac{\displaystyle\sum_{m=1}^{M} F(\underline{r}_E^{(m)}) \cdot F(\underline{u}_m)^*}{F(\underline{g})};$$

(k) performing an inverse DFT or inverse FFT (260) on the result of step (j) such that

$$F^{-1}\left(\frac{\sum_{m=1}^{M} F(\underline{r}_E^{(m)}) \cdot F(\underline{u}_m)^*}{F(\underline{g})}\right); \text{ and}$$

(l) despreading (265) the result of step (k) to obtain the estimated data symbols $\hat{\underline{d}}$.

**8.** A receiver comprising:

an antenna (300) for receiving radio frequency (RF) signals;
a sampling device (305) coupled to the antenna for producing a chip rate received vector;
a channel estimation device (325) coupled to the sampling device for determining a channel impulse response for the received vector, **characterized by**
a single user detector (SUD, 310) coupled to the sampling device (305) and the channel estimation device (325) for estimating a data vector using an extended algorithm which extends the received vector by zero padding the tail of the received vector and extends the channel impulse response by zero padding the tail of the channel impulse response.

**9.** The receiver of claim 8, wherein the SUD (310) comprises:

a channel equalizer (315) for using the channel impulse response to determine a spread vector; and
a despreader (320) coupled to the channel equalizer for despreading the spread vector to estimate the data vector.

**10.** The receiver of claim 8, wherein the single user detector (SUD) comprises:

(a) means for receiving (105, 110) a signal $\underline{r}^{(1)}$ at a first input and a channel impulse response $\underline{h}^{(1)}$ at a second input;
(b) means for zero padding (115) the received signal $\underline{r}^{(1)}$ in the tail until the length of sequence achieves length Lm and denoting the extended sequence after zero padding as $\underline{r}_E^{(1)}$;

(c) means for zero padding (125) the channel impulse response $\underline{h}^{(1)}$ in the tail until the length of the extended sequence achieves length Lm and denoting the extended sequence after zero padding as $\underline{u}_1$;

(d) means for performing a discrete Fourier Transform (DFT) or fast Fourier transform (FFT) (135) on $\underline{r}_E^{(1)}$ such that $F(\underline{r}_E^{(1)})$;

(e) means for performing DFT or FFT (140) on $\underline{u}_1$ such that $F(\underline{u}_1)$;
(f) means for conjugating (145) $F(\underline{u}_1)$ such that $F(\underline{u}_1)^*$;

(g) means for multiplying (150) the sequences $F(\underline{r}_E^{(1)})$ and $F(\underline{u}_1)^*$ such that $F(\underline{r}_E^{(1)}) \cdot F(\underline{u}_1)^*$, wherein for

M sampled sequences, steps (b) - (g) are repeated for sampled sequences 2,...,M such that $F(\underline{r}_E^{(m)}) \cdot F(\underline{u}_m)^*$, m = 2,..., M.

**11.** The receiver of claim 10, wherein all of the M sampled sequence results are added element-to-element such that

$$\sum_{m=1}^{M} F(\underline{r}_E^{(m)}) \cdot F(\underline{u}_m)^* \quad, \text{ M = 1,2,...,M.}$$

**12.** The receiver of claim 11, wherein the SUD comprises:

(h) means for generating a channel correlation vector $\underline{g}$ (180) using extended channel response sequences

$\underline{u}_1,...,\underline{u}_M$ such that $\underline{g} = \sum_{m=1}^{M} \underline{g}^{(m)}$ ;

(i) means for performing DFT or FFT (185) on channel correlation vector $\underline{g}$ such that $F(\underline{g})$;

(j) means for dividing element-by-element (190) the result in step (g) by the result in step (i) such that

$$\frac{\sum_{m=1}^{M} F(\underline{r}_E^{(m)}) \cdot F(\underline{u}_m)^*}{F(\underline{g})} ;$$

(k) means for performing an inverse DFT or inverse FFT (194) on the result of step (j) such that

$$F^{-1}\left(\frac{\sum_{m=1}^{M} F(\underline{r}_E^{(m)}) \cdot F(\underline{u}_m)^*}{F(\underline{g})}\right) ; \text{ and}$$

(l) means for despreading (198) the result of step (k) to obtain the estimated data symbols $\hat{\underline{d}}$.

13. A wireless transmit/receive unit (WTRU) comprising a receiver according to claim 8.

14. The wireless transmit/receive unit (WTRU) of claim 13, wherein the sampling device (305) is coupled to the antenna (300) for sampling the received signals at a multiple M of the chip rate, producing M received vector sequences; and the channel estimation device (325) is coupled to the sampling device for determining a channel impulse response for each received vector.

15. The WTRU of claim 14, wherein the SUD (310) comprises:

a channel equalizer (315) for using a channel impulse response to determine a spread vector; and
a despreader (320) coupled to the channel equalizer for despreading the spread vector to estimate the data vector using transmission codes in the received signals.

16. A base station comprising a receiver according to claim 8.

17. The base station of claim 16, wherein the sampling device (305) is coupled to the antenna (300) for sampling the received signals at a multiple M of the chip rate, producing M received vector sequences; and the channel estimation device (325) is coupled to the sampling device for determining a channel impulse response for each received vector.

18. The base station of claim 17, wherein the SUD (310) comprises:

a channel equalizer (315) for using a channel impulse response to determine a spread vector; and
a despreader (320) coupled to the channel equalizer for despreading the spread vector to estimate the data vector using transmission codes in the received signals.

19. A communications system (100) comprising:

a base station; and
a wireless transmit/receive unit (WTRU) according to claim 13 in communication with the base station.

20. The communications system (100) of claim 19, wherein the SUD (310) comprises:

a channel equalizer (315) for using the channel impulse response to determine a spread vector; and
a despreader (320) coupled to the channel equalizer for despreading the spread vector to estimate the data vector using transmission codes in the received signals.

**21.** A communications system (100) comprising:

a wireless transmit/receive unit (WTRU); and
a base station according to claim 16 in communication with the WTRU.

**22.** The communications system (100) of claim 21, wherein the SUD (310) comprises:

a channel equalizer (315) for using the channel impulse response to determine a spread vector; and
a despreader (320) coupled to the channel equalizer for despreading the spread vector to estimate the data
vector using transmission codes in the received signals.

**Patentansprüche**

**1.** Verfahren zum Wiedergewinnen von Daten aus mehreren in einem gemeinsamen Spektrum empfangenen Signalen
(205), wobei die mehreren Signale eine ähnliche Kanalantwort erfahren, mit folgenden Schritten:

Abtasten eines zusammengesetzten Signals, das die mehreren Empfangssignale aufweist, wobei ein Empfangsvektor erzeugt wird,
Schätzen einer Kanalantwort des zusammengesetzten Signals,
**gekennzeichnet durch**
Erweitern des Empfangsvektor **durch** Auffüllen des Endbereichs des Empfangsvektors mit Nullen (210),
Erweitern der Kanalantwort **durch** Auffüllen des Endbereichs der Kanalantwort mit Nullen (215),
Ausführen einer Kanalentzerrung für den Empfangsvektor unter Verwendung der erweiterten Kanalantwort,
wodurch ein Spreizvektor erzeugt wird, und
Entspreizen (265) des Spreizvektors, um Daten der mehreren Signale zu erzeugen.

**2.** Verfahren nach Anspruch 1, wobei ein Zeitintervall zwischen zwei aufeinander folgenden Abtastwerten in jedem
erweiterten Empfangsvektor die Chipdauer ist.

**3.** Verfahren nach Anspruch 1, wobei ein Zeitintervall zwischen zwei aufeinander folgenden Abtastwerte in jedem
erweiterten Empfangsvektor ein Bruchteil der Chipdauer ist.

**4.** Verfahren nach Anspruch 1, welches ferner folgende Schritte aufweist:

Berechnen einer ersten Spalte einer zirkulanten Matrix auf der Grundlage einer geschätzten Kanalantwort und
Rauschleistung,
Zerlegen einer zirkulanten Matrix des Empfangsvektors in der Domäne der schnellen Fourier-Transformation
(FFT),
Zerlegen einer zirkulanten Matrix der Kanalantwort in der Domäne der schnellen Fourier-Transformation (FFT),
Rekonstruieren des Empfangssignalvektors, wodurch sich ein erweiterter Signalvektor ergibt,
Berechnen des zusammengesetzten Spreizsignalvektors und
Entspreizen des zusammengesetzten Spreizsignals.

**5.** Verfahren nach Anspruch 1, wobei

(a) der Empfang mehrerer Signale das Empfangen (205) eines Signals $\underline{r}^{(1)}$ an einem ersten Eingang aufweist
und das Schätzen der Kanalantwort das Empfangen einer Kanalimpulsantwort $\underline{h}^{(1)}$ an einem zweiten Eingang
aufweist,
(b) die Erweiterung des Empfangssignals das Auffüllen des Endbereichs des Empfangssignals $\underline{r}^{(1)}$ mit Nullen
(210) aufweist, bis die Länge der Sequenz eine Länge Lm erreicht, und die erweiterte Sequenz nach dem
Auffüllen mit Nullen als $\underline{r}_E^{(1)}$ bezeichnet wird,
(c) die Erweiterung der Kanalantwort das Auffüllen des Endbereichs der Kanalimpulsantwort $\underline{h}^{(1)}$ mit Nullen
(215) aufweist, bis die Länge der erweiterten Sequenz die Länge Lm erreicht, und die erweiterte Sequenz nach
dem Auffüllen mit Nullen als $\underline{u}_1$ bezeichnet wird,
(d) die Kanalentzerrung aufweist:

Ausführen einer diskreten Fourier-Transformation (DFT) oder einer schnellen Fourier-Transformation (FFT)

(220) an $\underline{r}_E{}^{(1)}$, so dass $F(\underline{r}_E{}^{(1)})$,

Ausführen einer DFT oder einer FFT (220) an $\underline{u}_1$, so dass $F(\underline{u}_1)$,

Konjugieren (225) von $F(\underline{u}_1)$, so dass $F(\underline{u}_1)^*$,

Multiplizieren (230) der Sequenzen $F(\underline{r}_E{}^{(1)})$ und $F(\underline{u}_1)^*$, so dass $F(\underline{r}_E{}^{(1)}) \cdot F(\underline{u}_1)^*$, wobei für M abgetastete Sequenzen die Schritte (b) - (g) für die abgetasteten Sequenzen 2, ..., M wiederholt werden, so dass $F(\underline{r}_E{}^{(m)}) \cdot F(\underline{u}_m)^*$, wobei m = 2, ..., M ist.

**6.** Verfahren nach Anspruch 5, wobei alle in den Schritten (b) - (g) erhaltenen Ergebnisse der M abgetasteten Sequenzen Element für Element addiert werden (240), so dass $\sum\limits_{m=1}^{M} F\left(\underline{r}_E{}^{(m)}\right) \cdot F'\left(\underline{u}_m\right)^*$ , wobei M = 1, 2, ..., M ist.

**7.** Verfahren nach Anspruch 6, welches ferner folgende Schritte aufweist:

(h) Erzeugen eines Kanalkorrelationsvektors $\underline{g}$ (245) unter Verwendung erweiterter Kanalantwortsequenzen $\underline{u}_1, ..., \underline{u}_M$, so dass $\underline{g} = \sum\limits_{m=1}^{M} \underline{g}^{(m)}$ ,

(i) Ausführen einer DFT oder einer FFT (250) an dem Kanalkorrelationsvektor $\underline{g}$, so dass $F(\underline{g})$,

(j) Teilen (255) des Ergebnisses in Schritt (g) durch das Ergebnis in Schritt (i) Element für Element, so dass

$$\frac{\sum\limits_{m=1}^{M} F'\left(\underline{r}_E{}^{(m)}\right) \cdot F\left(\underline{u}_m\right)^*}{F\left(\underline{g}\right)} ,$$

(k) Ausführen einer inversen DFT oder einer inversen FFT (260) an dem Ergebnis von Schritt (j), so dass

$$F^{-1}\left(\frac{\sum\limits_{m=1}^{M} F\left(\underline{r}_E{}^{(m)}\right) \cdot F\left(\underline{u}_m\right)^*}{F\left(\underline{g}\right)}\right) , \text{ und}$$

(l) Entspreizen (265) des Ergebnisses von Schritt (k), um die geschätzten Datensymbole $\hat{\underline{d}}$ zu erhalten.

**8.** Empfänger, welcher aufweist:

eine Antenne (300) zum Empfangen von Funkfrequenzsignalen (RF-Signalen),

eine Abtastvorrichtung (305), die mit der Antenne verbunden ist, um einen Chipraten-Empfangsvektor zu erzeugen,

eine Kanalschätzvorrichtung (325), die mit der Abtastvorrichtung verbunden ist, um eine Kanalimpulsantwort für den Empfangsvektor zu bestimmen,

**gekennzeichnet durch**

einen Einzelbenutzerdetektor (SUD, 310), der mit der Abtastvorrichtung (305) und der Kanalschätzvorrichtung (325) verbunden ist, um einen Datenvektor unter Verwendung eines Erweiterungsalgorithmus zu schätzen, der den Empfangsvektor durch Auffüllen des Endbereichs des Empfangsvektors mit Nullen erweitert und die Kanalimpulsantwort **durch** Auffüllen des Endbereichs der Kanalimpulsantwort mit Nullen erweitert.

**9.** Empfänger nach Anspruch 8, wobei der SUD (310) aufweist:

einen Kanalentzerrer (315) zur Verwendung der Kanalimpulsantwort für das Bestimmen eines Spreizvektors und einen Entspreizer (320), der mit dem Kanalentzerrer verbunden ist, um den Spreizvektor zu entspreizen um den Datenvektor zu schätzen.

**10.** Empfänger nach Anspruch 8, wobei der Einzelbenutzerdetektor (SUD) aufweist:

(a) eine Einrichtung zum Empfangen (105, 110) eines Signals $\underline{r}^{(1)}$ an einem ersten Eingang und einer Kanalimpulsantwort $\underline{h}^{(1)}$ an einem zweiten Eingang,

(b) eine Einrichtung zum Auffüllen des Endbereichs des Empfangssignals $\underline{r}^{(1)}$ mit Nullen (115), bis die Länge der Sequenz die Länge Lm erreicht, und zum Bezeichnen der erweiterten Sequenz nach dem Auffüllen mit Nullen als $\underline{r}_E^{(1)}$,

(c) eine Einrichtung zum Auffüllen des Endbereichs der Kanalimpulsantwort $\underline{h}^{(1)}$ mit Nullen (125), bis die Länge der erweiterten Sequenz die Länge Lm erreicht, und zum Bezeichnen der erweiterten Sequenz nach dem Auffüllen mit Nullen als $\underline{u}_1$,

(d) eine Einrichtung zum Ausführen einer diskreten Fourier-Transformation (DFT) oder einer schnellen Fourier-Transformation (FFT) (135) an $\underline{r}_E^{(1)}$, so dass $F(\underline{r}_E^{(1)})$,

(e) eine Einrichtung zum Ausführen einer DFT oder einer FFT (140) an $\underline{u}_1$, so dass $F(\underline{u}_1)$,

(f) eine Einrichtung zum Konjugieren (145) von $F(\underline{u}_1)$, so dass $F(\underline{u}_1)^*$,

(g) eine Einrichtung zum Multiplizieren (150) der Sequenzen $F(\underline{r}_E^{(1)})$ und $F(\underline{u}_1)^*$, so dass $F(\underline{r}_E^{(1)}) \cdot F(\underline{u}_1)^*$, wobei für M abgetastete Sequenzen die Schritte (b) - (g) für die abgetasteten Sequenzen 2, ..., M wiederholt werden, so dass $F(\underline{r}_E^{(m)}) \cdot F(\underline{u}_m)^*$, wobei m = 2, ..., M ist.

**11.** Empfänger nach Anspruch 10, wobei alle Ergebnisse der M abgetasteten Sequenzen Element für Element addiert werden, so dass $\displaystyle\sum_{m=1}^{M} F\!\left(\underline{r}_E^{(m)}\right) \cdot F\!\left(\underline{u}_m\right)^*$ , wobei M = 1, 2, ..., M ist.

**12.** Empfänger nach Anspruch 11, wobei der SUD aufweist:

(h) eine Einrichtung zum Erzeugen eines Kanalkorrelationsvektors $\underline{g}$ (180) unter Verwendung erweiterter Kanalantwortsequenzen $\underline{u}_1, ..., \underline{u}_M$, so dass $\underline{g} = \displaystyle\sum_{m=1}^{M} \underline{g}^{(m)}$ ,

(i) eine Einrichtung zum Ausführen einer DFT oder einer FFT (185) an dem Kanalkorrelationsvektor $\underline{g}$, so dass $F(\underline{g})$,

(j) eine Einrichtung zum Teilen des Ergebnisses in Schritt (g) durch das Ergebnis in Schritt (i) Element für Element (190), so dass $\dfrac{\displaystyle\sum_{m=1}^{M} F\!\left(\underline{r}_E^{(m)}\right) \cdot F\!\left(\underline{u}_m\right)^*}{F\!\left(\underline{g}\right)}$ ,

(k) eine Einrichtung zum Ausführen einer inversen DFT oder einer inversen FFT (194) an dem Ergebnis von Schritt (j), so dass $F^{-1}\!\left(\dfrac{\displaystyle\sum_{m=1}^{M} F\!\left(\underline{r}_E^{(m)}\right) \cdot F\!\left(\underline{u}_m\right)^*}{F\!\left(\underline{g}\right)}\right)$ , und

(l) eine Einrichtung zum Entspreizen (198) des Ergebnisses von Schritt (k), um die geschätzten Datensymbole $\underline{d}$ zu erhalten.

**13.** Drahtlose Sende-/Empfangseinheit (WTRU), welche einen Empfänger nach Anspruch 8 aufweist.

**14.** Drahtlose Sende-/Empfangseinheit (WTRU) nach Anspruch 13, wobei die Abtastvorrichtung (305) mit der Antenne (300) verbunden ist, um das Empfangssignal bei einem Mehrfachen M der Chiprate abzutasten, wodurch M Empfangsvektorsequenzen erzeugt werden, und wobei die Kanalschätzvorrichtung (325) mit der Abtastvorrichtung verbunden ist, um eine Kanalimpulsantwort für jeden Empfangsvektor zu bestimmen.

**15.** WTRU nach Anspruch 14, wobei der SUD (310) aufweist:

einen Kanalentzerrer (315) zur Verwendung einer Kanalimpulsantwort für das Bestimmen eines Spreizvektors und

einen Entspreizer (320), der mit dem Kanalentzerrer verbunden ist, um den Spreizvektor zu entspreizen, um den Datenvektor unter Verwendung von Sendecodes in den Empfangssignalen zu schätzen.

**16.** Basisstation mit einem Empfänger nach Anspruch 8.

**17.** Basisstation nach Anspruch 16, wobei die Abtastvorrichtung (305) mit der Antenne (300) verbunden ist, um das Empfangssignal bei einem Mehrfachen M der Chiprate abzutasten, wodurch M Empfangsvektorsequenzen erzeugt werden, und wobei die Kanalschätzvorrichtung (325) mit der Abtastvorrichtung verbunden ist, um eine Kanalimpulsantwort für jeden Empfangsvektor zu bestimmen.

**18.** Basisstation nach Anspruch 17, wobei der SUD (310) aufweist:

einen Kanalentzerrer (315) zur Verwendung einer Kanalimpulsantwort für das Bestimmen eines Spreizvektors und

einen Entspreizer (320), der mit dem Kanalentzerrer verbunden ist, um den Spreizvektor zu entspreizen, um den Datenvektor unter Verwendung von Sendecodes in den Empfangssignalen zu schätzen.

**19.** Kommunikationssystem (100), welches aufweist:

eine Basisstation und

eine drahtlose Sende-/Empfangseinheit (WTRU) nach Anspruch 13, die mit der Basisstation kommuniziert.

**20.** Kommunikationssystem (100) nach Anspruch 19, wobei der SUD (310) aufweist:

einen Kanalentzerrer (315) zur Verwendung der Kanalimpulsantwort für das Bestimmen eines Spreizvektors und

einen Entspreizer (320), der mit dem Kanalentzerrer verbunden ist, um den Spreizvektor zu entspreizen, um den Datenvektor unter Verwendung von Sendecodes in den Empfangssignalen zu schätzen.

**21.** Kommunikationssystem (100), welches aufweist:

eine drahtlose Sende-/Empfangseinheit (WTRU) und

eine Basisstation nach Anspruch 16, die mit der WTRU kommuniziert.

**22.** Kommunikationssystem (100) nach Anspruch 21, wobei der SUD (310) aufweist:

einen Kanalentzerrer (315) zur Verwendung der Kanalimpulsantwort für das Bestimmen eines Spreizvektors und

einen Entspreizer (320), der mit dem Kanalentzerrer verbunden ist, um den Spreizvektor zu entspreizen, um den Datenvektor unter Verwendung von Sendecodes in den Empfangssignalen zu schätzen.

**Revendications**

**1.** Procédé pour récupérer des données d'une pluralité de signaux reçus (205) dans un spectre partagé, la pluralité de signaux obtenant une réponse de canal similaire, le procédé comprenant les étapes consistant à :

échantillonner un signal composite comprenant la pluralité de signaux reçus, en produisant un vecteur reçu ;

estimer une réponse de canal du signal composite, **caractérisé par** les étapes consistant à :

étendre le vecteur reçu en complétant par des zéros la queue du vecteur reçu (210) ;

étendre la réponse de canal en complétant par des zéros la queue de la réponse de canal (215) ;

effectuer une égalisation de canal sur le vecteur reçu en utilisant la réponse de canal étendue, en produisant un vecteur d'étalement ; et

effectuer un désétalement (265) sur le vecteur d'étalement pour produire des données de la pluralité de signaux.

**2.** Procédé selon la revendication 1, dans lequel un intervalle de temps entre deux échantillons successifs dans chaque vecteur reçu étendu est la durée de chip.

**3.** Procédé selon la revendication 1, dans lequel un intervalle de temps entre deux échantillons successifs dans chaque vecteur reçu étendu est une fraction de la durée de chip.

**4.** Procédé selon la revendication 1, comprenant en outre les étapes consistant à :

calculer une première colonne d'une matrice circulante sur la base d'une réponse de canal estimée et d'une puissance de bruit estimée ;
décomposer une matrice circulante de vecteur reçu dans un domaine de transformation rapide de Fourier (FFT) ;
décomposer une matrice circulante de réponse de canal dans le domaine de transformation rapide de Fourier (FFT) ;
reconstruire le vecteur de signal reçu engendrant un vecteur de signal étendu ;
calculer le vecteur de signal d'étalement composite ; et
effectuer le désétalement du signal d'étalement composite.

**5.** Procédé selon la revendication 1, dans lequel :

(a) la réception d'une pluralité de signaux comprend la réception (205) d'un signal $\underline{r}^{(1)}$ à une première entrée, et l'estimation de la réponse de canal comprend la réception d'une réponse d'impulsion de canal $\underline{h}^{(1)}$ à une deuxième entrée ;
(b) l'extension du signal reçu comprend le complément par des zéros (210) du signal reçu $\underline{r}^{(1)}$ dans la queue jusqu'à ce que la longueur de la séquence atteigne la longueur Lm et l'indication de la séquence étendue après le complément par des zéros en tant que $\underline{r}_E^{(1)}$ ;

(c) l'extension de la réponse de canal comprend le complément par des zéros (215) de la réponse d'impulsion de canal $\underline{h}^{(1)}$ dans la queue jusqu'à ce que la longueur de la séquence étendue atteigne la longueur Lm et l'indication de la séquence étendue après le complément par des zéros en tant que $\underline{u}_1$ ;
(d) l'égalisation de canal comprend les étapes consistant à :

effectuer une transformation discrète de Fourier (DFT) ou une transformation rapide de Fourier (FFT) (220)

sur $\underline{r}_E^{(1)}$ en tant que $F(\underline{r}_E^{(1)})$ ;

effectuer une DFT ou une FFT (220) sur $\underline{u}_1$ en tant que $F(\underline{u}_1)$ ;
conjuguer (225) $F(\underline{u}_1)$ en tant que $F(\underline{u}_1)^*$ ;

multiplier (230) les séquences $F(\underline{r}_E^{(1)})$ et $F(\underline{u}_1)^*$ en tant que $F(\underline{r}_E^{(1)}) \cdot F(\underline{u}_1)^*$, dans

lequel pour M séquences échantillonnées, les étapes (b) à (g) sont répétées pour les séquences échantillonnées 2, ..., M en tant que $F(\underline{r}_E^{(m)}) \cdot F(\underline{u}_m)^*$, m = 2, ..., M.

**6.** Procédé selon la revendication 5, dans lequel l'intégralité des M résultats de séquences échantillonnées obtenus aux étapes (b) à (g) sont ajoutés (240) élément par élément en tant que $\sum_{m=1}^{m} F(\underline{r}_E^{(m)}) \cdot F(\underline{u}_m)^*$ M = 1, 2, ..., M.

**7.** Procédé selon la revendication 6, comprenant en outre les étapes consistant à :

(h) générer un vecteur de corrélation de canal $\underline{g}$ (245) en utilisant des séquences de réponse de canal étendu

$\underline{u}_1$, ..., $\underline{u}_M$ en tant que $\underline{g} = \sum_{m=1}^{M} \underline{g}^{(m)}$ ;

(i) effectuer une DFT ou une FFT (250) sur le vecteur de corrélation de canal $\underline{g}$ en tant que $F(\underline{g})$ ;

(j) diviser (255) élément par élément le résultat de l'étape (g) par le résultat de l'étape (i) en tant que

$$\frac{\sum_{m=1}^{M} F(\underline{r}_{E}^{(m)}) \cdot F(\underline{u}_{m})^{*}}{F(\underline{g})} \; ;$$

(k) effectuer une DFT inverse ou une FFT inverse (260) sur le résultat de l'étape (j) en tant que

$$F^{-1}\left(\frac{\sum_{m=1}^{M} F(\underline{r}_{E}^{(m)}) \cdot F(\underline{u}_{m})^{*}}{F(\underline{g})}\right) \quad \text{et} \; ;$$

(l) effectuer le désétalement (265) du résultat de l'étape (k) pour obtenir les symboles de données estimées $\hat{\underline{d}}$.

**8.** Récepteur comprenant :

une antenne (300) pour recevoir des signaux de radiofréquence (RF) ;
un dispositif d'échantillonnage (305) couplé à l'antenne pour produire un vecteur reçu de débit de chip ;
un dispositif d'estimation de canal (325) couplé au dispositif d'échantillonnage pour déterminer une réponse d'impulsion de canal pour le vecteur reçu, **caractérisé par**
un détecteur d'utilisateur unique (SUD, 310) couplé au dispositif d'échantillonnage (305) et au dispositif d'estimation de canal (325) pour estimer un vecteur de données en utilisant un algorithme étendu qui étend le vecteur reçu en complétant par des zéros la queue du vecteur reçu et étend la réponse d'impulsion de canal en complétant par des zéros la queue de la réponse d'impulsion de canal.

**9.** Récepteur selon la revendication 8, dans lequel le SUD (310) comprend :

un égaliseur de canal (315) pour utiliser la réponse d'impulsion de canal pour déterminer un vecteur d'étalement ; et
un dispositif de désétalement (320) couplé à l'égaliseur de canal pour désétaler le vecteur d'étalement pour estimer le vecteur de données.

**10.** Récepteur selon la revendication 8, dans lequel le détecteur d'utilisateur unique (SUD) comprend :

(a) des moyens pour recevoir (105, 110) un signal $\underline{r}^{(1)}$ à une première entrée et une réponse d'impulsion de canal $\underline{h}^{(1)}$ à une deuxième entrée ;
(b) des moyens pour compléter par des zéros (115) le signal reçu $\underline{r}^{(1)}$ dans la queue jusqu'à ce que la longueur de séquence atteigne la longueur Lm et pour dénoter la séquence étendue après le complément par des zéros en tant que $\underline{r}_{E}^{(1)}$ ;
(c) des moyens pour compléter par des zéros (125) la réponse d'impulsion de canal $\underline{h}^{(1)}$ dans la queue jusqu'à ce que la longueur de la séquence étendue atteigne la longueur Lm et pour dénoter la séquence étendue après le complément par des zéros en tant que $\underline{u}_1$ ;
(d) des moyens pour effectuer une transformation discrète de Fourier (DFT) ou une transformation rapide de Fourier (FFT) (135) sur $\underline{r}_{E}^{(1)}$ en tant que $F(\underline{r}_{E}^{(1)})$ ;
(e) des moyens pour effectuer une DFT ou une FFT (140) sur $\underline{u}_1$ en tant que $F(\underline{u}_1)$ ;
(f) des moyens pour conjuguer (145) $F(\underline{u}_1)$ en tant que $F(\underline{u}_1)^{*}$ ;
(g) des moyens pour multiplier (150) les séquences $F(\underline{r}_{E}^{(1)})$ et $F(\underline{u}_1)^{*}$ en tant que $F(\underline{r}_{E}^{(1)}) \cdot F(\underline{u}_1)^{*}$, dans lequel pour M séquences échantillonnées, les étapes (b) à (g) sont répétées pour les séquences échantillonnées 2, ..., M en tant que $F(\underline{r}_{E}^{(m)}) \cdot F(\underline{u}_m)^{*}$, m = 2, ..., M.

**11.** Récepteur selon la revendication 10, dans lequel l'intégralité des M résultats de séquences échantillonnées sont ajoutés élément par élément en tant que $\sum_{m=1}^{m} F(\underline{r}_E^{(m)}) \cdot F(\underline{u}_m)^*$ , M = 1, 2, ..., M.

**12.** Récepteur selon la revendication 11, dans lequel le SUD comprend :

(h) des moyens pour générer un vecteur de corrélation de canal $\underline{g}$ (180) en utilisant des séquences de réponse de canal étendu $\underline{u}_1, ..., \underline{u}_M$ en tant que $\underline{g} = \sum_{m=1}^{M} \underline{g}^{(m)}$ ;

(i) des moyens pour effectuer une DFT ou une FFT (185) sur le vecteur de corrélation de canal $\underline{g}$ en tant que F($\underline{g}$) ;

(j) des moyens pour diviser élément par élément (190) le résultat de l'étape (g) par le résultat de l'étape (i) en tant que $\dfrac{\sum_{m=1}^{M} F(\underline{r}_E^{(m)}) \cdot F(\underline{u}_m)^*}{F(\underline{g})}$ ;

(k) des moyens pour effectuer une DFT inverse ou une FFT inverse (194) sur le résultat de l'étape (j) en tant que $F^{-1}\left(\dfrac{\sum_{m=1}^{M} F(\underline{r}_E^{(m)}) \cdot F(\underline{u}_m)^*}{F(\underline{g})}\right)$ ; et

(l) des moyens pour effectuer le désétalement (198) sur le résultat de l'étape (k) pour obtenir les symboles de données estimées $\hat{\underline{d}}$.

**13.** Unité d'émission/réception sans fil (WTRU) comprenant un récepteur selon la revendication 8.

**14.** Unité d'émission/réception sans fil (WTRU) selon la revendication 13, dans laquelle le dispositif d'échantillonnage (305) est couplé à l'antenne (300) pour échantillonner les signaux reçus à un multiple M du débit de chip, en produisant M séquences de vecteurs reçus ; et le dispositif d'estimation de canal (325) est couplé au dispositif d'échantillonnage pour déterminer une réponse d'impulsion de canal pour chaque vecteur reçu.

**15.** WTRU selon la revendication 14, dans laquelle le SUD (310) comprend :

un égaliseur de canal (315) pour utiliser une réponse d'impulsion de canal pour déterminer un vecteur d'étalement ; et
un dispositif de désétalement (320) couplé à l'égaliseur de canal pour effectuer le désétalement du vecteur d'étalement pour estimer le vecteur de données en utilisant des codes de transmission dans les signaux reçus.

**16.** Station de base comprenant un récepteur selon la revendication 8.

**17.** Station de base selon la revendication 16, dans laquelle le dispositif d'échantillonnage (305) est couplé à l'antenne (300) pour échantillonner les signaux reçus à un multiple M du débit de chip, en produisant M séquences de vecteurs reçus ; et le dispositif d'estimation de canal (325) est couplé au dispositif d'échantillonnage pour déterminer une réponse d'impulsion de canal pour chaque vecteur reçu.

**18.** Station de base selon la revendication 17, dans laquelle le SUD (310) comprend :

un égaliseur de canal (315) pour utiliser une réponse d'impulsion de canal pour déterminer un vecteur d'étalement ; et

un dispositif de désétalement (320) couplé à l'égaliseur de canal pour effectuer le désétalement du vecteur d'étalement pour estimer le vecteur de données en utilisant des codes de transmission dans les signaux reçus.

**19.** Système de communication (100) comprenant :

une station de base ; et
une unité d'émission/réception sans fil (WTRU) selon la revendication 13 en communication avec la station de base.

**20.** Système de communication (100) selon la revendication 19, dans lequel le SUD (310) comprend :

un égaliseur de canal (315) pour utiliser la réponse d'impulsion de canal pour déterminer un vecteur d'étalement ; et
un dispositif de désétalement (320) couplé à l'égaliseur de canal pour effectuer le désétalement du vecteur d'étalement pour estimer le vecteur de données en utilisant des codes de transmission dans les signaux reçus.

**21.** Système de communication (100) comprenant :

une unité d'émission/réception sans fil (WTRU) ; et
une station de base selon la revendication 16 en communication avec la WTRU.

**22.** Système de communication (100) selon la revendication 21, dans lequel le SUD (310) comprend :

un égaliseur de canal (315) pour utiliser la réponse d'impulsion de canal pour déterminer un vecteur d'étalement ; et
un dispositif de désétalement (320) couplé à l'égaliseur de canal pour effectuer le désétalement du vecteur d'étalement pour estimer le vecteur de données en utilisant des codes de transmission dans les signaux reçus.

FIG. 1

## FIG. 2

| FIG. 2A |
| FIG. 2B |
| FIG. 2C |

## FIG. 2A

```
           ( START )
              │
              ▼
```

RECEIVE SIGNAL $\underline{r}^{(1)}$ AND CHANNEL IMPULSE RESPONSE $h^{(1)}$. ——205

ZERO PAD THE RECEIVED SIGNAL $\underline{r}^{(1)}$ IN THE TAIL UNTIL THE LENGTH OF SEQUENCE ACHIEVES LM. DENOTE THE EXTENDED SEQUENCE AFTER ZERO PADDING AS $\underline{r}_E^{(1)}$. ——210

ZERO PAD THE CHANNEL IMPULSE RESPONSE $\underline{h}^{(1)}$ IN THE TAIL UNTIL THE LENGTH OF SEQUENCE ACHIEVES LM. DENOTE THE EXTENDED SEQUENCE AFTER ZERO PADDING AS $\underline{u}_1$. ——215

PERFORM DFT OR FFT ON $\underline{r}_E^{(1)}$ AND $\underline{u}_1$ THAT WERE OBTAINED IN STEPS 210 AND 215 RESPECTIVELY SUCH THAT $F(\underline{r}_E^{(1)})$ AND $F(\underline{u}_1)$. ——220

PERFORM CONJUGATE ON $F(\underline{u}_1)$ SUCH THAT $F(\underline{u}_1)^*$. ——225

PERFORM ELEMENT-TO-ELEMENT MULTIPLICATION OF SEQUENCE $F(\underline{r}_E^{(1)})$ AND $F(\underline{u}_1)^*$ SUCH THAT $F(\underline{r}_E^{(1)}) \cdot F(\underline{u}_1)^*$. — 230

FOR OVER-SAMPLING SYSTEM WITH M SAMPLED SEQUENCES, REPEAT STEPS 210 TO 230 FOR SAMPLED SEQUENCES 2,....,M SUCH THAT $F(\underline{r}_E^{(m)}) \cdot F(\underline{u}_m)^*$, m=2,..., M. — 235

PERFORM ELEMENT-TO-ELEMENT ADDITION OF RESULTS OBTAINED IN STEPS 230 AND 235 FOR ALL M SAMPLED SEQUENCES SUCH THAT $\sum_{m=1}^{M} F(\underline{r}_E^{(m)}) \cdot F(\underline{u}_m)^*$, M=1,2,...,M. — 240

GENERATE CHANNEL CORRELATION VECTOR $\underline{g}$ USING EXTENDED CHANNEL RESPONSE SEQUENCES $\underline{u}_1$,..., $\underline{u}_M$ SUCH THAT $\underline{g} = \sum_{m=1}^{M} \underline{g}^{(m)}$. — 245

*FIG. 2B*

PERFORM DFT OR FFT ON CHANNEL CORRELATION VECTOR $\underline{g}$ SUCH THAT $F(\underline{g})$. ⟵ 250

DIVIDE ELEMENT-BY-ELEMENT THE RESULT IN STEP 240 BY THE RESULT IN STEP 250 SUCH THAT ⟵ 255

$$\frac{\sum\limits_{m=1}^{M} F(\underline{r}^{(m)}) \cdot F(\underline{u}_m)^*}{F(\underline{g})}.$$

PERFORM INVERSE DFT OR INVERSE FFT ON THE RESULT IN STEP 255 SUCH THAT ⟵ 260

$$F^{-1}\left(\frac{\sum\limits_{m=1}^{M} F(\underline{r}^{(m)}) \cdot F(\underline{u}_m)^*}{F(\underline{g})}\right).$$

DESPREAD THE RESULT IN STEP 260 TO OBTAIN THE ESTIMATED DATA SYMBOLS $\underline{\hat{d}}$. ⟵ 265

END

*FIG. 2C*

WG4 CASE 1, 12 CHANNELIZATION CODES, SF = 16 EACH

**FIG. 3**

WG4 CASE 1, 12 CHANNELIZATION CODES, SF = 16 EACH

**FIG. 4**

WG4 CASE 1, 12 CHANNELIZATION CODES, SF = 16 EACH

rawBER of all bits

TRUNCATED ALGORITHM
EXTENDED ALGORITHM

SNR PER CODE [dB]

## FIG. 5

WG4 CASE 2, 12 CHANNELIZATION CODES, SF = 16 EACH

rawBER of TFCI-1

TRUNCATED ALGORITHM
EXTENDED ALGORITHM

SNR PER CODE [dB]

## FIG. 6

WG4 CASE 2, 12 CHANNELIZATION CODES, SF = 16 EACH

**FIG. 7**

WG4 CASE 2, 12 CHANNELIZATION CODES, SF = 16 EACH

**FIG. 8**

FIG. 9A

FIG. 9B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 0239610 A2